# EUROPÄISCHE PATENTSCHRIFT

(11) **EP 0 660 607 B1**
(45) Veröffentlichungstag und Bekanntmachung des Hinweises auf die Patenterteilung: **17.03.1999**
(21) Anmeldenummer: 94119723.8
(22) Anmeldetag: 14.12.1994
(51) Int. Cl.: H04N 7/00

(54) **Verfahren zum Empfangen von in einem Fernsehsignal übertragenen Teletextdaten**
Method of receiving teletext data, which are transmitted in a television signal
Méthode de réception de données de télétexte transmises dans un signal de télévision

(30) Priorität: 22.12.1993 DE 4343951
(43) Veröffentlichungstag der Anmeldung: 28.06.1995
(73) Patentinhaber: DEUTSCHE THOMSON-BRANDT GMBH, 78048 Villingen-Schwenningen (DE); Institut für Rundfunktechnik GmbH, 80939 München (DE)
(72) Erfinder: Eitz, Gerhard, D-85586 Poing (DE); Gyarmati, Sandor, D-78052 Villingen-Schwenningen (DE)

(56) Entgegenhaltungen:
- DE-A- 3 624 375
- DE-A- 4 239 351
- GB-A- 2 225 519
- US-A- 4 794 626

## Beschreibung

Die Erfindung bezieht sich auf ein Verfahren gemäß dem Oberbegriff des Patentanspruchs 1.

Die Teletextseiten werden in der Austastlücke des Fernsehsignals gesendet. Jeweils eine Reihe einer Seite wird in einer Fernsehzeile zusammen mit einem Steuerrahmen zur Synchronisierung und einem Adreßrahmen zur Adressierung der Nutzdaten übertragen, die letztendlich als lesbare Informationen auf dem Bildschirm angezeigt werden.

Ein derartiges Verfahren ist aus der Druckschrift "The World System Teletext, Technical Specification", Department of Trade and Industry, Information Technology Division, 29 Bressenden Place, GB-London SW119, Seiten 3-20 bekannt (Sept. 1976).

Aus DE 36 24 375 ist eine Synchronisierungsvorrichtung für ein Multiplexbildübertragungssystem bekannt. Dieses umfaßt eine Einrichtung zur Bestimmung einer Abrufphase von jedem bzw. für jedes Videotextsignalpaket und eine zweite Einrichtung zur Wiederbestimmung der Abrufphase, wenn die tatsächliche Phase des Videotextsignalpakets einer vorbestimmten Bedingung genügt. Wenn bei dieser Synchronisierungsvorrichtung die Synchronisierung der Videotextsignalpakete Diskontinuität aufweist, bestimmt die erste Einrichtung die Paket-Abrufphase, wenn sie Kontinuität aufweist, bestimmt die zweite Einrichtung die Paket-Abrufphase.

Aus Kompatibilitätsgründen besitzen die normalen Level-1 Seiten und die Ergänzungsseiten für höhere Level, wie sie aus DE 39 14 697 bekannt sind, den gleichen Steuerrahmen und den gleichen mit dem Hamming-Code 8/4 geschützten Adreßrahmen.

Durch Auswertung des Hamming-Codes kann ein 1-Bit-Fehler in jeweils einem Wort des Adreßrahmens erkannt und korrigiert werden. Um eine höhere Decodierungssicherheit für den Adreßrahmen einer Teletextseite ohne zusätzliche Fehlerschutzmaßnahmen zu erreichen, ist in dem älteren Deutschen Patent DE-C-4 239 351 vorgeschlagen worden (24.2.94), aus dem decodierten und ggf. fehlerkorrigierten Adreßrahmen einer Teletextreihe den Adreßrahmen für die darauffolgende Teletextreihe zu prognostizieren und bei Abweichung an zwei oder mehreren Informationseinheiten eines Wortes den prognostizierten anstelle des empfangenen Adreßrahmens zur Adressierung des Datenstroms für die betreffende Teletextreihe zu verwenden.

Damit ist es bei einem Doppelfehler im Adreßrahmen - beispielsweise in der Reihenadresse - dem Dekoder möglich, die korrekte Reihenadresse wieder herzustellen und alle zugehörigen Nutzdaten der betreffenden Reihe zuzuordnen.

Treten dagegen Doppelfehler in den Nutzdaten auf, beispielsweise in den Ergänzungsdaten für höhere Level, so kann vom Dekoder eine Korrektur durch die mitübertragenen Fehlerschutzinformationen erfolgen.

Voraussetzung für die oben aufgeführten, dekoderseitigen Korrekturmaßnahmen ist jedoch die sichere Erkennung des Steuerrahmens. Dieser Steuerrahmen setzt sich aus einer bestimmten Signalfolge zur Generierung des Datentakts und einem definierten Code mit einer Länge von acht Bit, dem sog. Rahmenwort, zur Byte-Synchronisierung zusammen.

Zur Byte-Synchronisierung werden die einlaufenden Daten bitweise mit dem Rahmenwort verglichen. Eine korrekte Byte-Synchronisierung ist nur dann möglich, wenn acht oder sieben Übereinstimmungen vom Dekoder festgestellt werden, also das Rahmenwort nicht oder nur durch einen Fehler gestört ist.

Dagegen führt ein zweiter Fehler im Rahmenwort dazu, daß der Dekoder den Steuerrahmen nicht erkennt; dadurch sind alle folgenden Nutzdaten dieser Fernsehzeile verloren.

Damit erweist sich die in der Teletext-Spezifikation vorgesehene Dekodierung des Steuerrahmens als Engpaß, welcher die in den genannten Druckschriften die für die Adreßdekodierung und für die Ergänzungsdaten vorgesehenen Fehlerschutzmaßnahmen wieder zunichte macht.

Eine Verringerung der Schwelle für die Anzahl der Übereinstimmungen beim Vergleich des Rahmenwortes ist nicht zweckmäßig, da in diesem Fall das Rahmenwort nicht mehr zuverlässig gefunden werden kann.

Weiterhin kommt eine Beseitigung des Engpasses durch Änderung des Steuerrahmens aus Kompatibilitätsgründen nicht in Betracht. Hinzukommt, daß ein verbesserter Fehlerschutz des Steuerrahmens eine entsprechend erhöhte Redundanz erfordert, welche die verfügbare Nutzdatenrate verringert bzw. die Wartezeit auf eine gewünschte Teletextseite weiter vergrößert.

Auch besondere Schaltungsmaßnahmen in Dekodern neuester Generation bringen keine Abhilfe des Problems: Bei schlechten Empfangsbedingungen können viele Reihen einer Seite wegen falscher Dekodierung des Steuerrahmens nicht erkannt und damit nicht dargestellt werden, obwohl die restlichen Reihen der betreffenden Seite oft fast fehlerfrei sind.

Die Aufgabe der Erfindung besteht gegenüber darin, bei einem Verfahren der eingangs erwähnten Art eine höhere Decodiersicherheit für den Steuerrahmen von Teletextseiten, insbesondere bei Doppelfehlern, ohne weitere Fehlerschutzmaßnahmem zu erreichen.

Die Aufgabe wird erfindungsgemäß durch die kennzeichnenden Merkmale des Patentanspruchs 1 gelöst.

Vorteilhafte Ausgestaltungen und Weiterbildungen ergeben sich aus den Unteransprüchen.

Bei dem erfindungsgemäßen Verfahren wird der Engpaß bei Störung des Steuerrahmens dadurch beseitigt, daß zur Erkennung des Steuerrahmens neben dem bitweisen Vergleich zwischen einlaufenden Daten und Rahmenwort der Takt aus den Teletext-Daten der letzten Fernsehzeile mit fortgeführt und über einen Zähler ausgewertet wird.

Die Erfindung wird anhand der Zeichnungen näher erläutert. Es zeigt:
- Fig.1: eine schematische Darstellung eines Teletextdecoders mit Steuerrahmen-Dekodierung;
- Fig.2: eine schematische Darstellung der Steuerrahmen-Dekodierung des Teletextdecoders nach Fig.1;
- Fig. 3: eine schematische Darstellung eines Ausführungsbeispiels einer Steuerrahmen-Dekodierung nach der Erfindung;
- Fig 4: ein Beispiel für eine gestörte und eine mit mehr als einem Fehler gestörte Daten folge eines Steuerrahmens, wobei die gestörte Daten folge einem Vergleich mit dem gesuchten Rahmenwort unterzogen wird.

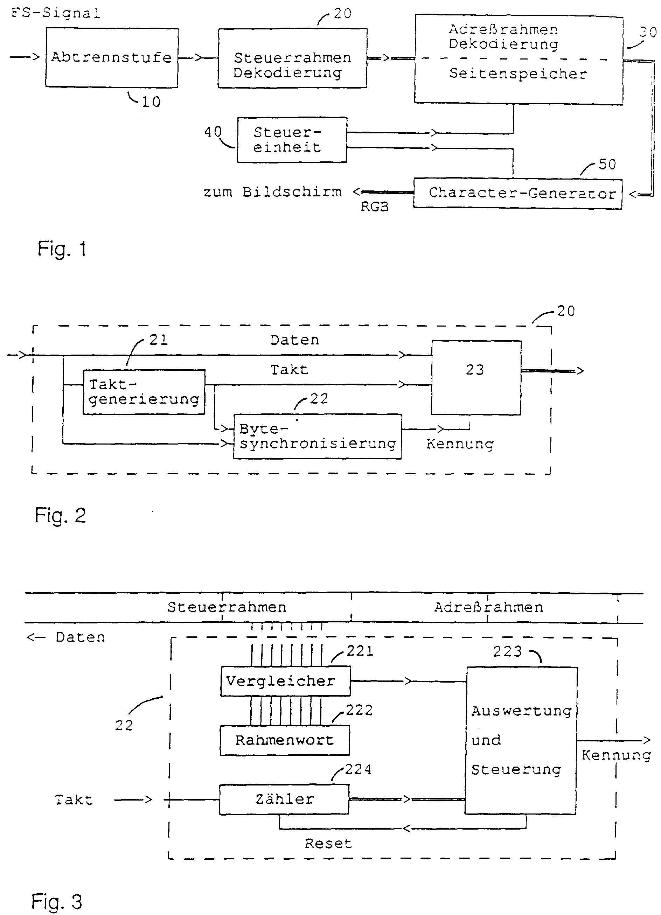

Der in Fig. 1 lediglich schematisch und nur hinsichtlich der zum Verständnis der Erfindung erforderlichen Einzelheiten dargestellte Teletextdecoder weist eine Datenabtrennstufe 10 auf, welche aus dem ankommenden Fernsehsignal den darin enthaltenen Teletext-Datenstrom abtrennt. Aus dem abgetrennten Teletext-Datenstrom wird in einer Steuerrahmen-Dekodierung 20, die nachfolgend anhand von Fig.2 noch im einzelnen erläutert wird, der Takt der Daten und eine Steuerrahmeninformation gewonnen, mit der die byteweise Zusammenstellung der nachfolgenden Daten des Teletextdatenstrom möglich wird. In der nachfolgenden Stufe 30 werden die byteweise zusammengestellten Teletextdaten entsprechend den Informationen aus dem Adreßrahmen reihenweise zu Teletextseiten zusammengestellt und in einem Seitenspeicher zwischengespeichert.

Die zwischengespeicherten Teletextseiten werden aus dem Seiten speicher 30 unter Steuerung einer Steuereinheit 40 auf Anforderung des Benutzers an einen Character-Generator 50 ausgelesen, welcher die Teletextseite in ein R-G-B-Bildsignal zur Anzeige auf einem Bildschirm umsetzt.

Wie aus dem Blockschaltbild eines Ausführungsbeispiels für eine Steuerrahmen-Dekodierung in Fig. 2 hervorgeht, werden aus dem ankommenden Teletext-Datenstrom mittels einer Taktgenerierungsstufe 21 der Takt der Teletextdaten gewonnen und mit der erforderlichen Präzision fortlaufend bis zu den nächsten eintreffenden Daten generiert.

Takt und Daten werden der erfindungsgemäßen Bytesynchronisierung 22 zugeführt, die bei erkanntem Rahmenwort eine Kennung an die Stufe 23 abgibt. Die Stufe 23, der außerdem noch Daten und Takt zugeführt werden, teilt entsprechend dem Kennung-Signal den Datenstrom in Bytes und stellt die Bytes der Adreßrahmen-Dekodierung 30 (Fig. 1) zur Verfügung.

Fig. 3 zeigt den prinzipiellen Aufbau der erfindungsgemäßen Byte-Synchronisierung 22. Die einlaufenden Daten werden bitweise vom Vergleicher 221 mit der Stufe 222 verglichen, die das zu ermittelnde Rahmenwort als festen Speicherwert enthält. Für den Teletext-Dienst ist in der "World System Teletext" Spezifikation das Rahmenwort "27 Hex" vereinbart. Weitere Dienste mit anderen Rahmenwörtern sind denkbar, z.B. ein Dienst für eine Tele-Zeitung. Die Anzahl der jeweils festgestellten Übereinstimmungen werden vom Vergleicher 221 an die Auswertungs-und Steuerungs-Stufe 223 übermittelt. Sobald acht Übereinstimmungen signalisiert werden, gilt das Rahmenwort als sicher erkannt; eine entsprechende Kennung wird an die Stufe 23 von Fig. 2 ausgegeben und ein Zähler 224 zurückgesetzt, dem der Takt aus der Taktgenerierung 21 zugeführt wird.

Werden dagegen weniger als acht Übereinstimmungen signalisiert, wird zusätzlich von der Stufe 223 der Zählerstand des Zählers 224 ausgewertet. Beträgt der Zählerstand 444 oder ein Vielfaches dieser Zahl, wird von der Auswertungs-und Steuerungs-Stufe 223 das Rahmenwort auch dann erkannt, wenn es mit ein oder zwei (oder auch mehr) Fehlern gestört wird. Auch in diesem Fall wird das Kennungs-Signal ausgegeben und der Zähler 224 zurückgesetzt.

Zum Verständnis hierfür ist folgendes anzumerken:
Die Taktrate für Teletext beträgt das 444-Fache der nominellen Fernseh-Zeilenfrequenz von 15,625 kHz. Die Erfindung baut also darauf auf, daß nach n 444 Takten für n=1,2,3,...15, 298,299... wieder eine Fernseh-Zeile mit einem Rahmenwort und Teletext-Daten zu erwarten ist.

Um geringfügig unterschiedliche Taktfrequenzen zwischen Sender und Dekoder auszugleichen, kann es zweckmäßig sein, auch Zählerstände von n 444+-1 Takten für eine Auswertung zuzulassen, insbesondere dann, wenn zwischen den einzelnen Datenströmen die Zeit von einem Halbbild liegt, also n größer als 297 ist.

Um den Aufwand auf der Dekoderseite zu begrenzen, kann es weiterhin zweckmäßig sein, nur jeweils die Takte einer einzigen Austastlücke zu zählen. Dabei wird in Kauf genommen, daß die jeweils erste Teletextzeile in einem Halbbild nur bei fehlerfreien Rahmenwort erkannt werden kann.

Insbesondere bei Teletext-Programmen, die im sog. 'Parallel Mode' betrieben werden, bei denen Teletextdaten bestimmter Zeilen von unterschiedlichen Sendern generiert werden können, ist es zweckmäßig, in der Auswertungs- und Steuerungsstufe 223 die einzelnen Zählerstände zwischen den einzelnen Teletextzeilen abzuspeichern (Lern-Mode), um sie später in Abhängigkeit von der betreffenden Zeile für die Erkennung von gestörten Rahmenwörtern zu verwenden.

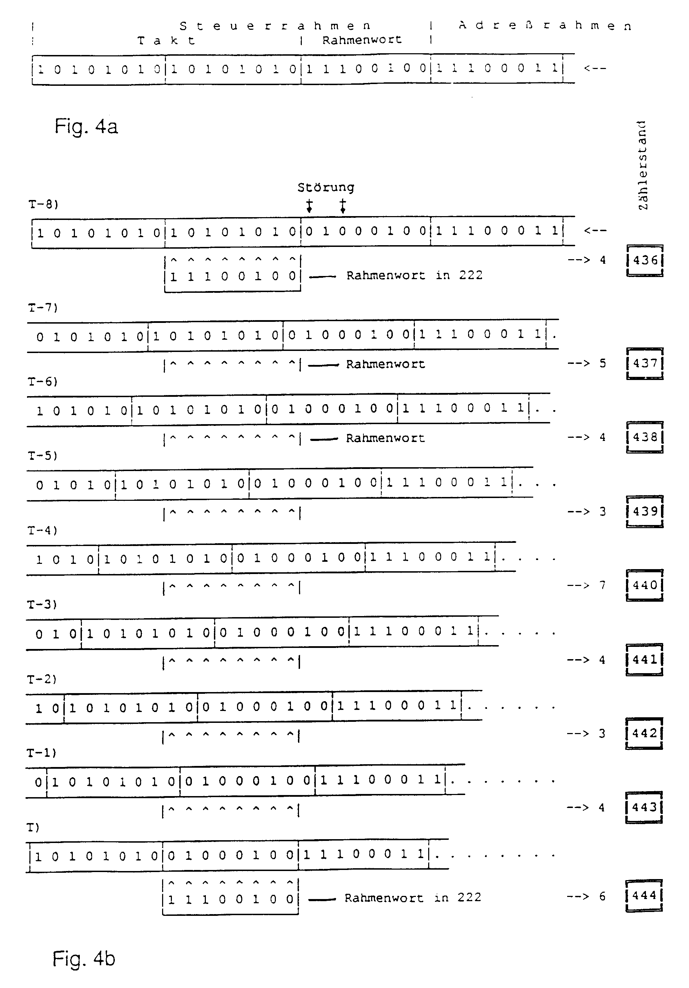

Die vorstehend beschriebene Erkennung des Steuerrahmens bei einem zweifach gestörten Rahmenwort wird anhand eines Beispiels in Fig. 4 näher gezeigt.

Fig. 4a zeigt eine ungestörte Datenfolge des Steuerrahmens, der aus einem Takt-Anteil und dem Rahmenwort besteht. An den Steuerrahmen schließt sich ein Teil des Adreßrahmens an.

Fig. 4b zeigt den Einlauf eines Datenstroms mit einem durch zwei Fehler gestörten Rahmenwort bei den Takten T-8), T-7),...T), wobei T) der zu erkennende Zeitpunkt für den erfolgten Einlauf des Rahmenwortes ist. Bei dem Takt T-8) wird die Bitfolge '10101010' mit dem zu erkennenden, gespeicherten Rahmenwort '11100100' verglichen und vier Übereinstimmungen (an den Positionen '1 11 1') festgestellt.
Der Takt-Zähler steht auf '436' (444-8 Takte).
Beim folgenden Takt T-7) erhöht sich die Anzahl der Übereinstimmungen auf fünf (an den Positionen ' 1 111') und der Zählerstand auf '437'.
Beim Takt T-4) ähnelt die gerade anstehende Datenfolge an sieben Positionen dem zu erkennenden Rahmenwort. Ein herkömmlicher, entsprechend der Spezifikation arbeitender Dekoder wird durch eine solche Datenfolge getäuscht und signalisiert fälschlicherweise vier Takte zu früh das Rahmenwort als erkannt.

Ein nach dem erfindungsgemäßen Verfahren ausgelegter Dekoder dagegen erkennt stets zutreffend beim Takt T) an der Anzahl von sechs Übereinstimmungen und am Zählerstand '444', daß ein Rahmenwort vorliegt. Daraufhin löst er das Kennungs-Signal aus.

## Patentansprüche

1. Verfahren zum Empfangen von in einem Fernsehsignal übertragenen Teletextdaten, bei dem aus dem Fernsehsignal ein Datenstrom abgetrennt, die zu jeweils einer Teletextseite gehörenden Daten als Teletextreihen gesammelt und die so zusammengestellten Teletextseiten zwischengespeichert werden, wobei zur Byte-Synchronisierung der Teletextreihen ein aus einem Byte bestehender Steuerrahmen aus dem Datenstrom durch einen bitweisen Vergleich mit einem Rahmenwort selektiert und dekodiert wird, **dadurch gekennzeichnet**, daß der Takt aus den Teletext-Daten der letzten Fernsehzeile fortgeführt und gezählt wird, und daß bei der Dekodierung des Steuerrahmens abhängig von der Anzahl der Übereinstimmungen beim bitweisen Vergleich mit dem Rahmenwort folgende Schritte durchgeführt werden:
a) werden beim bitweisen Vergleich acht Übereinstimmungen festgestellt, gilt der Steuerrahmen als erkannt und der Zähler wird zurückgesetzt;
b) werden weniger als acht Übereinstimmungen festgestellt, wird anhand des Zählerstandes des Taktzählers festgestellt, ob ein Zählerstand von 444 oder ein Vielfaches n dieses Zählerstandes erreicht ist, wobei im Falle des Erreichens dieses Zählerstandes der Steuerrahmen als erkannt gilt und der Zähler zurückgesetzt wird.

2. Verfahren nach Anspruch 1, **dadurch gekennzeichnet**, daß auch bei Zählerständen, die von 444 oder dem Vielfachen n dieses Zählerstandes nur ± 1 Takt abweichen, der Steuerrahmen als erkannt gilt.

3. Verfahren nach Anspruch 2, **dadurch gekennzeichnet**, daß für ein erstes Halbbild für das Vielfache n die Werte n = 1, 2, 3, ... 15 und für ein nächstes Halbbild für das Vielfache n die Werte n = 298, 299, ... vorgesehen sind.

4. Verfahren nach einem der Ansprüche 1 bis 3, **dadurch gekennzeichnet**, daß nur die Takte einer einzigen Austastlücke gezählt werden, wobei der Takt ab dem ersten als fehlerfrei erkannten Steuerrahmen gezählt wird.

5. Verfahren nach einem der Ansprüche 1 bis 4, **dadurch gekennzeichnet**, daß in einem sog. Lernmode die jeweiligen Zählerstände zwischen den einzelnen mit Teletextdaten belegten Fernsehzeilen erfaßt und abgespeichert werden und daß die gespeicherten Zählerstände in Abhängigkeit von der betreffenden Zeile für die Erkennung von gestörten Rahmenwörtern verwendet werden.

## Claims

1. Method of receiving items of teletext data that are transmitted in a television signal, in which, a data stream is separated out from the television signal, the items of data appertaining to a respective teletext page are gathered together as teletext rows and the thus compiled teletext pages are buffer stored, whereby, for byte synchronising the teletext lines, a control frame consisting of one byte is selected and decoded from the data stream by means of a bit by bit comparison with a frame word, characterised in that, the clock rate of the items of teletext data of the last television line is continued and counted and that when decoding the control frame, the following steps are carried out in dependence on the number of coincidences occurring during the bit by bit comparison with the frame word:
a) if, during the bit by bit comparison, eight coincidences are detected, the control frame is considered to have been identified and the counter is reset;
b) if less than eight coincidences are detected, it is determined whether a counter state of 444 or a multiple n of this number has been reached on the basis of the count-state of the clock pulse counter, wherein, in the event that this counter state has been reached, the control frame is considered to have been identified and the counter is reset.

2. Method in accordance with claim 1, characterised in that also with counter state values deviating from 444 or the multiple n of said counter state only by ±1 clock period the control frame is considered to have been identified.

3. Method in accordance with claim 2, characterised in that for a first field values n = 1, 2, 3, ... 15 are used for the multiple n and for a succeeding field values n = 298, 299.... are used for the multiple n.

4. Method in accordance with any of the claims 1 to 3, characterised in that only the clock pulses from a single blanking interval are counted wherein the clock rate is counted as from the first control frame that is identified as being error-free.

5. Method in accordance with any of the claims 1 to 4, characterised in that, in a so-called learning mode, the instantaneous states of the counter, between the individual television lines that are occupied by items of teletext data, are detected and stored and that, in dependence on the line concerned, the stored counter states are used for the detection of frame words which have been subjected to interference.

## Revendications

1. Méthode de réception de données de télétexte transmises dans un signal de télévision, dans laquelle un flux de données est extrait du signal TV, les données appartenant à une page de télétexte sont rassemblées en lignes de télétexte, et les pages de télétexte ainsi classées sont mémorisées temporairement ; pour la synchronisation d'octet des lignes de télétexte, une trame de commande composée d'un octet est sélectionnée dans le flux de données et décodée, par une comparaison par bit avec un mot de verrouillage de trame ; **caractérisée en ce que** le cycle des données de télétexte de la dernière ligne TV est poursuivi et compter et que lors du décodage de la trame de commande selon le nombre de concordances lors de la comparaison par bit avec le mot de verrouillage de trame, les pas suivants sont effectués :
a) si lors de la comparaison par bit, huit concordances sont constatées, la trame de commande est considérée comme reconnue et le compteur est réinitialisé,
b) si moins de huit concordances sont constatées, il est vérifié à l'aide de l'état du compteur de cycles si un état de compteur de 444 ou un multiple n de cet état de compteur est atteint ; si tel est le cas, la trame de commande est considérée comme reconnue et le compteur est réinitialisé.

2. Méthode conformément à la revendication 1, **caractérisée en ce que** pour les états de compteurs s'écartant de 444 ou d'un multiple n de 444 de ± 1 cycle également, la trame de commande est considérée comme reconnue.

3. Méthode conformément à la revendication 2, **caractérisée en ce que** pour une première trame d'image, pour le multiple n, les valeurs n = 1, 2, 3 ... 15 sont prévues et pour une prochaine trame d'image pour le multiple n, les valeurs n = 298, 299, ...

4. Méthode conformément à une des revendications 1 à 3, **caractérisée en ce que** les cycles d'un seul intervalle de suppression sont comptés, et le cycle est compté à partir de la première trame de commande reconnue comme sans erreur.

5. Méthode conformément à une des revendications 1 à 4, **caractérisée en ce que** dans un dit mode d'apprentissage, les différents états de compteurs entre les lignes TV dotées de données télétexte sont saisis et mémorisés et que les états de compteur mémorisés sont utilisés en fonction de la ligne concernée pour la reconnaissance de mots de verrouillage de trame erronés.
